# EUROPEAN PATENT SPECIFICATION

(11) **EP 3 774 274 B1**
(45) Date of publication and mention of the grant of the patent: **08.06.2022**
(21) Application number: 19714210.2
(22) Date of filing: 02.04.2019
(51) Int. Cl.: B29C 48/355, B29C 48/10, B29C 48/90, B29C 48/25, B29C 55/28

(54) **GUIDING AND CALIBRATION DEVICE OF BLOWN PLASTIC FILM WITH THRUST BARS**
VORRICHTUNG ZUM FÜHREN UND KALIBRIEREN EINER BLASFOLIE AUS KUNSTSTOFF MIT SCHUBSTANGEN
DISPOSITIF DE GUIDAGE ET D'ÉTALONNAGE DE FILM PLASTIQUE SOUFFLÉ DOTÉ DE BARRES DE POUSSÉE

(30) Priority: 05.04.2018 IT 201800004244
(43) Date of publication of application: 17.02.2021
(73) Proprietor: Pontarolo, Luca, 21052 Busto Arsizio (VA) (IT); Pontarolo, Marco, Piero, 21013 Gallarate (VA) (IT)
(72) Inventor: Pontarolo, Luca, 21052 Busto Arsizio (VA) (IT); Pontarolo, Marco, Piero, 21013 Gallarate (VA) (IT)
(74) Representative: Mittler, Andrea
(86) International application number: PCT/EP2019/058270
(87) International publication number: WO 2019/192998

(56) References cited:
- WO-A1-2016/139573
- WO-A1-2016/193400
- CN-A- 104 985 801
- CN-A- 107 089 002
- CN-U- 204 820 320

## Description

The present invention relates to a guiding and calibration device of blown plastic film with thrust bars.

In systems for extruding blown plastic film, a mass of molten plastic resin is continuously extracted from an annular die arranged at the top of an extrusion head by means of a calender, in turn arranged on the top of said system and centered with respect to the vertical axis formed by the alignment of the center of the extrusion head with the average point of the calender rollers.

Such a tubular mass is blown from the inside to characterizie it in the shape of a thin tubular film, in jargon referred to as a "blown film", having defined dimensions and thicknesses.

Such an internal blowing is combined with a further cooling flow outside the tubular film in order to solidify the material thereof and fix the physical and dimensional features thereof. Such a solidifying area is commonly identified as a frost line.

In this first section of the system, the tubular film being formed is very delicate and subjected to significant air turbulences, thus requiring a device capable of accompanying the travel, containing oscillations and slips, in addition to helping define the final dimensional features thereof in conjunction with system monitoring sensors.

It is known how these devices, in jargon referred to as blown film guide calibrator drums, consist of one or more mutually articulated structures which simultaneously bring a plurality of guide means close to the circumference of the tubular film in a tangential manner.

Such guide means, usually consisting of a plurality of rollers or friction pads or air-blades, need to be adjustable to different diameters according to the dimensions of the desired tubular film, and simultaneously need to provide a solid and reliable anchoring point for the plurality of sensors which constantly monitor the dimensional parameters of the extruded product in order to timely intercept any deviations thereof from the set values, and thus provide the arrangements monitoring system with the checks required for convenient corrections. In order to provide the correct measurements, such sensors need to be arranged so as to read the tubular film always in radial direction, i.e. always pointing towards the center of the circumference described by the film. According to the most widespread signal processing logics, the reading distance between sensor and film needs to remain always constant along the whole diameter adjustment range of the calibrator.

It is therefore easy to understand how the positioning and orientation accuracy of the guide means together with the rigidity of the whole calibration device are important factors for the final quality of the extruded product made.

There are multiple types of such calibration devices, the main characterizations of which lie in the various system architectures created for the adjustment along the horizontal (radial) axis of the guide means assembly.

By way of example, the device described in DE-3117806C2 is mentioned as prior art, in which the kinematic mechanism for adjusting the diameter is of the "scissor" type, consisting of a plurality of pantograph joints, each moving roller assemblies in radial direction towards the center of the tubular film through a system of worm screws and sliding elements. Such a construction type has been considered the most desirable for a long time due to a theoretical "zero error" of tangential positioning of the median point of the guide elements over the circumferential surface of the blown film, despite a certain difficulty in containing the mechanical clearances inherently present in the specific type of mechanics. Other critical points of this type of architecture are the significant overall dimensions and high construction costs.

Another type of device is disclosed, for example, in IT-1421006, in which the guide elements are brought directly on the tangent of the tubular circumference by means of a simple pivoting movement of a plurality of arms connected to one another and pivoted on the bearing structure of the device. Such a type, referred to as a "pivot", has gradually established itself in the field due to the simplicity, reliability and efficacy of the system, which can be found in the sounder implementations, thus making the intrinsic and natural deviation between median point of the guide element and actual tangent point on the tubular circumference characterizing this type of negligible.

A variant of the pivoting architecture described above is known from US-3980418 and EP-1967350, in which the guide elements are separate from the respective bearing structures by interposing a lever system capable of correcting, to the greatest extent possible, the orientation of the guide means in order to decrease the deviation between the ideal middle tangent point and the actual tangent point thereof resulting from the pivot movement described above. Such systems approximate a radial orientation of the guide means, but still have a deviation error of +/- 1° in the best implementations.

Increasing productivity needs combined with the increasing quality standards required of the extruded tubular film led over more recent years to the development of a new machine architecture which sets the goal of combining the merits of the "scissor" type construction with those of the "pivot" type.

Known examples of such a type are found in US-2009304840 and WO-2016139573A1, where the guide elements are pivoted on the front end part of the respective "pivot" bearing structures and are each connected to the respective adjacent guide elements by means of components capable of keeping the orientation of such guide elements in a position which is always orthogonal with respect to the radius of the tubular film, whatever the variation in diameter induced by the main movement of the pivoting structures.

Both types mentioned above significantly overcome the characteristic limitations of the devices described above, but still have certain critical points.

The guide elements in US-2009304840 are connected to one another by means of a plurality of horizontal rods constrained in forced sliding guides with dual-track, offset according to both the horizontal and vertical axis. In addition to being expensive, such a kinematic mechanism may experience malfunctions induced by the inconstant maintenance activity of the guides and alignments. Therefore, the adjustment movement of the calibrator, with which the free sliding of the rods in the respective guides coincides, could lose fluidity and accuracy up to reaching the complete blocking if foreign or residual processing bodies were to obstruct the guides.

Instead, in the first embodiment of WO-2016139573A1, the guide elements are connected to one another by means of a plurality of joints, each of which has various couplings between the component parts thereof. Also in this case, problems of non-optimal fluidity with which such joints operate while fed by the main movement may occur. Being close to the extruded tubular film, such joints are indeed hit by the flow of cooling air which carries volatile pollutants and resin residuals of the extrusion process which may dirty the joints thereof up to compromising the free movement thereof, and therefore the capacity of fluid adjustment of the whole device, if a constant and timely maintenance activity is not performed.

Moreover, such joints need to be made with particular skill in order to keep the correct frictions to reduce the inherently present clearances, which otherwise may result in vibrations and inadequate overall rigidity of the system during the operation in the plant. This also results in an inevitable high production cost.

The second embodiment described in WO-2016139573A1 replaces such joints in favor of telescopic rods arranged diagonally, which according to the number of stages implemented for their construction, either greatly limit the radial excursion capacity of the calibrator or result in a very prohibitive production cost.

CN-104985801A describes a calibration device with a thrust bar fixed to each floating element able to slide in a guide of an adjacent floating element.

WO-2016/193400A1 shows a calibration device with single bars associated with respective floating elements. The ends of said bars slide two by two in guides separated from the floating elements.

It is object of the present invention to provide a guiding and calibration device of the "pivot" movement type which overcomes the above problems disclosed.

It is a further object of the present invention that said device allows an orientation induced by the guide elements to be obtained such that the tangent of the median point thereof always remains orthogonal with respect to the radius of the tubular film.

According to the invention, said and further objects are achieved by a device as defined in claim 1.

Advantageously, the bars of each pair of bars naturally and simultaneously rest on the respective two adjacent floating elements, while keeping the inner face of the floating element in a position which is always orthogonal with respect to the extruded tubular film, without any mechanical connection and therefore without further joints or couplings.

The device according to the present invention achieves a more affordable type of construction as compared to the known types, with less components, less kinematic mechanisms and less need for maintenance.

These and other features of the present invention will become more apparent from the following detailed description of a practical embodiment thereof, shown by way of non-limiting example in the accompanying drawings, in which:
figure 1 shows a perspective view of a device according to the present invention;
figure 2 shows a perspective view of a portion of the device;
figure 3 shows a top plan view of the portion of the device;
figure 4 shows a top plan view of the device in maximum opening position of the device;
figure 5 shows a top plan view of the device in intermediate opening position of the device;
figure 6 shows a top plan view of the device in minimum opening position of the device.

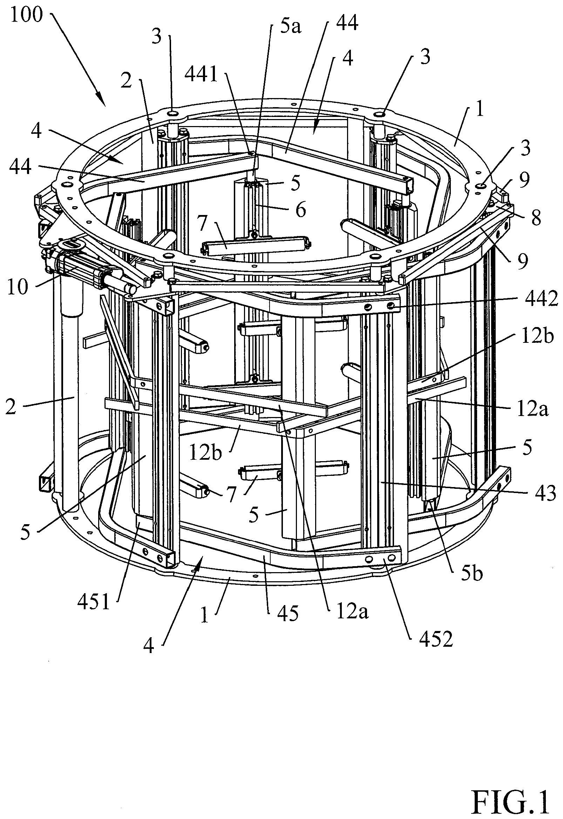

Figure 1 shows a guiding and calibration device 100 of blown plastic film (also referred to as a calibrator drum) in which a bearing structure comprises a pair of rings 1 spaced apart by columns 2. There may be polygonal structures in place of the rings 1.

Such rings 1 accommodate equidistant rotation fulcrums 3 of rotating structures 4 along an ideal circumference.

Each rotating structure 4 comprises a rotating vertical upright 43, an upper arm 44 and a lower arm 45.

The upper arm 44 is fixed to the upper end of upright 43, and the lower arm 45 is fixed to the lower end of upright 43.

Six rotating structures 4 are depicted in the present embodiment.

A vertical floating element 5 is rotatably fixed to a first end 441, 451 of each pair of arms 44, 45.

A second end 442, 452 of the arms 44, 45 is integral with upright 43.

At least one vertical profile 6 capable of supporting guide means 7 of the extruded tubular film is fixed to the floating element 5. Alternatively, the guide means 7 may be directly fixed to the floating element 5.

The guide means 7 in the present embodiment are two horizontal rollers conveniently fixed to the vertical profile 6. Alternatively, the guide means 7 may be friction pads, air-blades or others.

Possible elements required for the proper treatment of the extruded film, for example, reading sensors, air blowing mouths, pollutant suction hoods, and others, may also be fixed to the vertical profile 6 or to the floating element 5.

The rotating structures 4 are connected to one another through a pantograph system comprising levers 8 and rods 9 which synchronize the movement thereof, actuated by one or more motors 10.

The floating elements 5 rotate with respect to a vertical axis passing through an upper pin 5a and a lower pin 5b.

Each floating element 5 provides inclined planes 51, 52.

Said inclined planes 51, 52 vertically extend over the whole length of the vertical floating element 5.

Device 100 further comprises pairs of straight thrust bars.

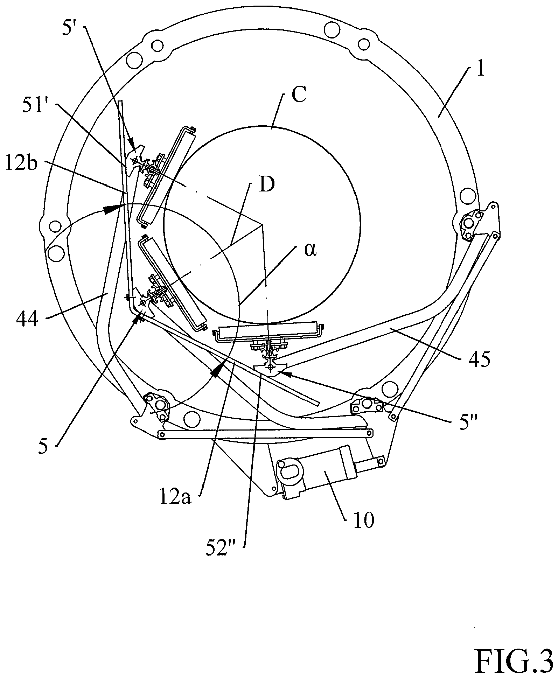

Each pair of bars comprises a first bar 12a and a second bar 12b, both integrally fixed to the same floating element 5 and forming an angle α therebetween which is equal to the existing inner angle between the sides of a regular polygon having a number of sides N equal to the number of floating elements 5, i.e. α = [(1-2/N) x 180°] (figure 3).

Each bar 12a, 12b of each pair of bars 12a, 12b is integrally fixed to respective inclined planes 51, 52 of the same floating element 5.

Said inclined planes 51, 52 mutually form the same angle α as the bars 12a, 12b.

Each bar 12a, 12b has a length which is equal to at least the existing distance between two adjacent floating elements 5.

The angle described by each bar 12a, 12b of each pair of bars 12a, 12b with respect to an axis D orthogonal to a circumference C to which the guide means 7 are always tangent, is equal to α/2, i.e. to half of said inner angle of the regular polygon having a number of sides equal to the number of the floating elements 5.

The bars 12a, 12b are therefore symmetrical with respect to the bisector of the angle α, i.e. the axis D.

Said axis D intersects the vertical rotation axis of the floating element 5.

The bars 12a, 12b are horizontal and are able to rest on inclined planes 51, 52 of a floating element 5 adjacent to the floating element 5 to which they are fixed.

The bars 12a, 12b of each pair of bars 12a, 12b preferably lie on the same horizontal plane.

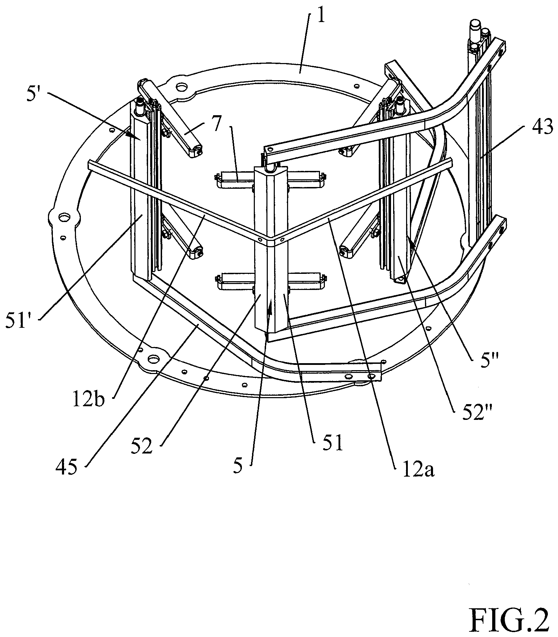

It is worth noting in figures 2, 3 that, in particular, bar 12a is fixed to an inclined plane 51 of a floating element 5 and bar 12b is fixed to an inclined plane 52 of the same floating element 5.

Bar 12a abuts on the inclined plane 52" of the floating element 5" adjacent to the right of the floating element 5, while bar 12b abuts on the inclined plane 51' of the floating element 5' adjacent to the left of the floating element 5.

The bars 12a, 12b fixed to the floating element 5 advantageously thrust the floating elements 5', 5" towards the center O of device 100 (and of circumference C).

Similarly, the floating elements 5', 5" have bars 12a, 12b fixed thereto and capable of thrusting the floating element 5 because they rest on respective inclined planes 52, 51.

Obviously, in order to avoid undesired contacts, the bars 12a, 12b fixed to the floating element 5 are at different heights than the bars 12a, 12b fixed to the floating elements 5', 5".

The bars 12a, 12b of each pair of bars 12a, 12b may be mutually integral, i.e. they form a single section bar with two portions forming angle α and fixed to a floating element 5 when said angle α is formed.

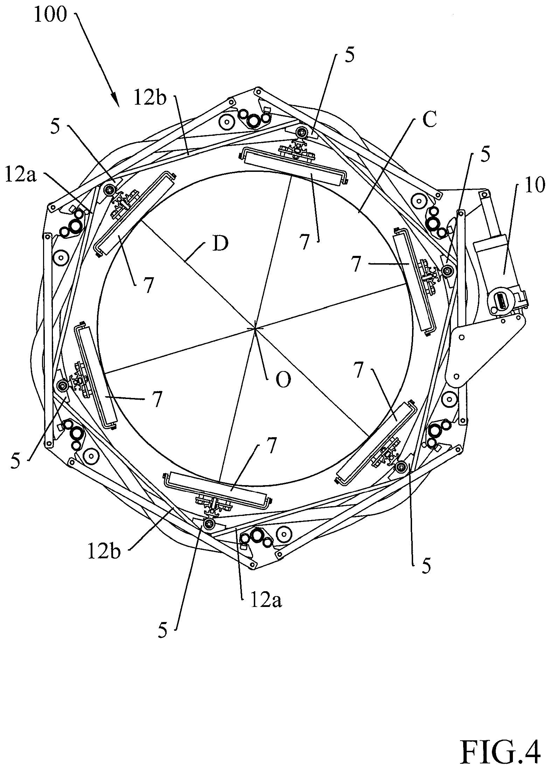

Figures 4 to 6 depict device 100 in three exemplary positions of maximum, intermediate and minimum opening.

In operation, starting from the maximum opening position in figure 4, the activation of motor 10 allows the simultaneous clockwise rotation of the rotating structures 4.

The arms 44, 45 rotate and with them the floating elements 5, which in turn rotate about the vertical axis passing through the pins 5a, 5b.

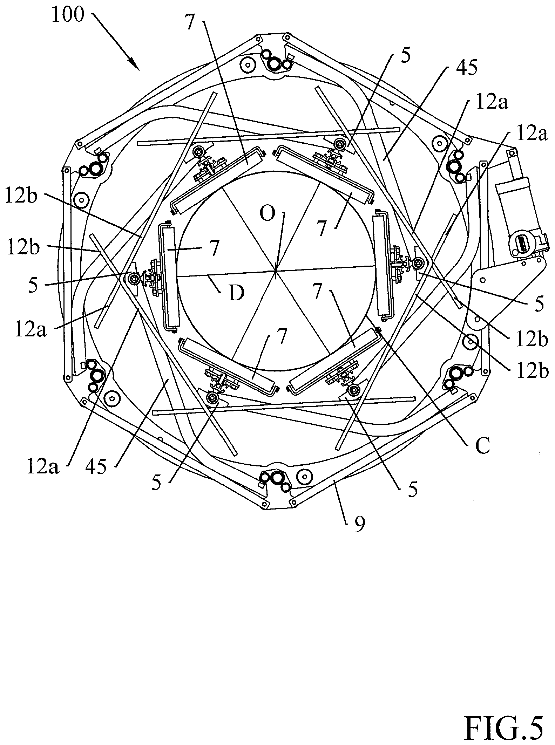

Advantageously, the rollers 7 stay horizontal and tangent to the same circumference C (figure 5) due to the thrust of the bars 12a, 12b on adjacent floating elements 5, said bars 12a, 12b of each pair of bars 12a, 12b always remaining mutually inclined according to angle α.

The bars 12a, 12b rest on the inclined planes 52, 51 of the adjacent floating elements 5, thrusting them towards center O; during the thrust, the bars 12a, 12b slide on said inclined planes 52, 51 in horizontal direction.

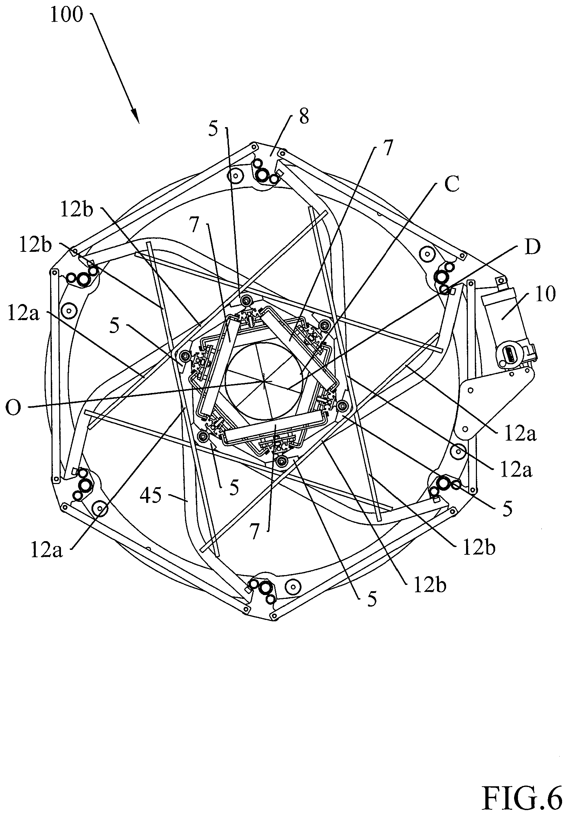

Continuing with the rotation, the minimum opening position (figure 6) is reached, in which circumference C has minimum radius. It is worth noting that the rollers 7 overlap one another in said position because they are fixed at various heights on the vertical profile 6.

Device 100 according to the present invention achieves a more affordable type of construction as compared to the known types, with less components, less kinematic mechanisms, and especially without any need for maintenance.

The correct installation of the bars 12a, 12b on the respective floating element 5 is facilitated by making the latter by means of an extruded section bar having inclined planes which are symmetrical with respect to axis D, passing through the center O of circumference C and through the vertical rotation axis of the floating element 5.

The ends of each bar 12a, 12b naturally and simultaneously rest on the respective two adjacent floating elements 5, while keeping the inner face of the floating element 5 in a position which is always orthogonal with respect to the extruded tubular film, without any mechanical connection and therefore without further joints or couplings.

By providing all the floating elements 5 with such bars 12a, 12b, all the guide means 7 are naturally arranged in radial position, i.e. tangent to circumference C.

During the adjusting movement of device 100, the inner face of each bar 12a, 12b simply slides on the adjacent floating element 5 without modifying the radial orientation of the floating elements 5.

The ends of the bars 12a, 12b may be left completely overhanging or, should it be required, be supported by simple rests, so long as they are not an obstacle to the free sliding of said bars 12a, 12b during the adjusting movement of the device.

Such bars 12a, 12b may be installed indifferently in the lower, median or upper area of device 100.

A single arm or more than two arms may be provided in place of a pair of arms 44, 45 for each vertical upright 43.

## Claims

1. Guiding and calibration device (100) of a blown plastic film, comprising a bearing structure (1, 2) which provides along an ideal circumference equidistant rotation fulcrums (3) of rotating structures (4),
each rotating structure (4) comprises a rotating vertical upright (43) and at least one arm (44, 45) fixed to said rotating vertical upright (43),
a vertical floating element (5) is rotatably fixed to the at least one arm (44, 45),
guide means (7) of the blown plastic film are fixed to the vertical floating element (5),
the rotating structures (4) are connected to each other through motion synchronization means (8, 9) operated by at least one motor (10),
**characterized in that**
the device (100) further comprises pairs of rectilinear thrust bars (12a, 12b) in which a first bar (12a) and a second bar (12b) are both integrally fixed to a same vertical floating element (5) and form a fixed angle (α) between them,
each bar (12a, 12b) of each pair of bars (12a, 12b) having a length such as to slidably rest on vertical floating elements (5', 5") adjacent to said vertical floating element (5) to which said bars (12a, 12b) are fixed, in any position taken by the device (100) between a maximum opening position and a minimum opening position.

2. Device (100) according to claim 1, **characterized in that** each vertical floating element (5) is provided with inclined planes (51, 52), each bar (12a, 12b) of each pair of bars (12a, 12b) is integrally fixed to respective inclined planes (51, 52) of a same vertical floating element (5), said inclined planes (51, 52) form a fixed angle (α) between them.

3. Device (100) according to claim 2, **characterized in that** said inclined planes (51, 52) vertically extend along the whole length of the vertical floating element (5).

4. Device (100) according to claim 2 or 3, **characterized in that** the first bar (12a) is able to slidably rest on the inclined plane (52") of the vertical floating element (5") adjacent to the right of the vertical floating element (5) to which it is fixed, while the second bar (12b) is able to slidably rest on the inclined plane (51') of the vertical floating element (5') adjacent to the left of the vertical floating element (5 ) to which it is fixed.

5. Device (100) according to any one of the preceding claims, **characterized in that** the angle described by each bar (12a, 12b) of each pair of bars (12a, 12b) with respect to an axis (D) orthogonal to a circumference (C) to which the guiding means (7) are always tangent, is equal to half of said fixed angle (α).

6. Device (100) according to any one of the preceding claims, **characterized in that** the bars (12a, 12b) are horizontal.

7. Device (100) according to any one of the preceding claims, **characterized in that** the bars (12a, 12b) of each pair of bars (12a, 12b) are mutually integral, namely they form a single section bar with two portions forming said fixed angle (α) and fixed to a vertical floating element (5) where said fixed angle (α) is formed.

8. Device (100) according to any one of the preceding claims, **characterized in that** it provides a number of pairs of bars (12a, 12b) equal to the number of vertical floating elements (5).

9. Device (100) according to any one of the preceding claims, **characterized in that** each rotating structure (4) comprises an upper arm (44) and a lower arm (45) fixed to said rotating vertical upright (43), the vertical floating element (5) being rotatably fixed to each pair of arms (44, 45).

10. Device (100) according to any one of the preceding claims, **characterized in that** the at least one arm (44, 45) has a first end (441, 451) to which the vertical floating element (5) is rotatably fixed, and a second end (442, 452) integrally fixed to the rotating vertical upright (43).

11. Device (100) according to any one of the preceding claims, **characterized in that** at least one vertical profile (6), which is able to support the guide means (7), is fixed to the vertical floating element (5).

12. Device (100) according to any one of the preceding claims, **characterized in that** the guide means (7) are rollers.

## Patentansprüche

1. Führungs- und Kalibriervorrichtung (100) für Blasfolie aus Kunststoff, mit einer Tragstruktur (1, 2), die entlang eines idealen Umfangs äquidistante Drehpunkte (3) von Rotationsstrukturen (4) bereitstellt,
wobei jede Rotationsstruktur (4) einen rotierenden vertikalen Pfosten (43) und mindestens einem Arm (44, 45) aufweist, der an dem rotierenden vertikalen Pfosten (43) befestigt ist,
wobei ein vertikales schwimmendes Element (5) an dem mindestens einen Arm (44, 45) drehbar befestigt ist,
wobei Führungseinrichtungen (7) für die Kunststoff-Blasfolie an dem vertikalen schwimmenden Element (5) befestigt sind,
wobei die Rotationsstrukturen (4) durch Bewegungs-Synchronisationseinrichtungen (8, 9) miteinander verbunden sind, die durch mindestens einen Motor (10) betrieben werden,
**dadurch gekennzeichnet,**
**dass** die Vorrichtung (100) ferner Paare von geradlinigen Schubstangen (12a, 12b) aufweist, bei denen eine erste Stange (12a) und eine zweite Stange (12b) beide an demselben vertikalen schwimmenden Element (5) in integraler Weise befestigt sind und einen festen Winkel (a) zwischen sich bilden,
wobei jede Stange (12a, 12b) jedes Stangenpaares (12a, 12b) eine derartige Länge aufweist, dass sie in jeder von der Vorrichtung (100) eingenommenen Position zwischen einer maximalen Öffnungsposition und einer minimalen Öffnungsposition auf vertikalen schwimmenden Elementen (5', 5") gleitend verschiebbar aufliegt, die dem vertikalen schwimmenden Element (5) benachbart sind, an dem die Stangen (12a, 12b) befestigt sind.

2. Vorrichtung (100) nach Anspruch 1,
**dadurch gekennzeichnet, dass** jedes vertikale schwimmende Element (5) mit geneigten Ebenen (51, 52) versehen ist, wobei jede Stange (12a, 12b) jedes Stangenpaares (12a, 12b) an jeweiligen geneigten Ebenen (51, 52) eines gleichen vertikalen schwimmenden Elements (5) in integraler Weise befestigt ist, wobei die geneigten Ebenen (51, 52) zwischen sich einen festen Winkel (a) bilden.

3. Vorrichtung (100) nach Anspruch 2,
**dadurch gekennzeichnet, dass** sich die geneigten Ebenen (51, 52) vertikal entlang der gesamten Länge des vertikalen schwimmenden Elements (5) erstrecken.

4. Vorrichtung (100) nach Anspruch 2 oder 3,
**dadurch gekennzeichnet, dass** die erste Stange (12a) auf der geneigten Ebene (52") des vertikalen schwimmenden Elements (5") gleitend verschiebbar aufliegen kann, das sich rechts neben dem vertikalen schwimmenden Element (5) befindet, an dem sie befestigt ist, während die zweite Stange (12b) auf der geneigten Ebene (51') des vertikalen schwimmenden Elements (5') gleitend verschiebbar aufliegen kann, das sich links neben dem vertikalen schwimmenden Element (5) befindet, an dem sie befestigt ist.

5. Vorrichtung (100) nach einem der vorhergehenden Ansprüche,
**dadurch gekennzeichnet, dass** der Winkel, der von jeder Stange (12a, 12b) jedes Stangenpaares (12a, 12b) in Bezug auf eine Achse (D) orthogonal zu einem Umfang (C) beschrieben wird, zu dem die Führungseinrichtungen (7) stets tangential sind, gleich der Hälfte des festen Winkels (a) ist.

6. Vorrichtung (100) nach einem der vorhergehenden Ansprüche,
**dadurch gekennzeichnet, dass** die Stangen (12a, 12b) horizontal sind.

7. Vorrichtung (100) nach einem der vorhergehenden Ansprüche,
**dadurch gekennzeichnet, dass** die Stangen (12a, 12b) jedes Stangenpaares (12a, 12b) miteinander einstückig sind, nämlich eine einzige Profilstange mit zwei Bereichen bilden, die den festen Winkel (a) bilden und an einem vertikalen schwimmenden Element (5) befestigt sind, an dem der feste Winkel (a) gebildet wird.

8. Vorrichtung (100) nach einem der vorhergehenden Ansprüche,
**dadurch gekennzeichnet, dass** sie eine Anzahl von Stangenpaaren (12a, 12b) vorsieht, die gleich der Anzahl von vertikalen schwimmenden Elementen (5) ist.

9. Vorrichtung (100) nach einem der vorhergehenden Ansprüche,
**dadurch gekennzeichnet, dass** jede Rotationsstruktur (4) einen oberen Arm (44) und einen unteren Arm (45) aufweist, die an dem rotierenden vertikalen Pfosten (43) befestigt sind, wobei das vertikale schwimmende Element (5) an jedem Armpaar (44, 45) drehbar befestigt ist.

10. Vorrichtung (100) nach einem der vorhergehenden Ansprüche,
**dadurch gekennzeichnet, dass** der mindestens eine Arm (44, 45) ein erstes Ende (441, 451), an dem das vertikale schwimmende Element (5) drehbar befestigt ist, und ein zweites Ende (442, 452) aufweist, das an dem rotierenden vertikalen Pfosten (43) in integraler Weise befestigt ist.

11. Vorrichtung (100) nach einem der vorhergehenden Ansprüche,
**dadurch gekennzeichnet, dass** an dem vertikalen schwimmenden Element (5) mindestens ein vertikales Profil (6) befestigt ist, das die Führungseinrichtungen (7) tragen kann.

12. Vorrichtung (100) nach einem der vorhergehenden Ansprüche, **dadurch gekennzeichnet, dass** die Führungseinrichtungen (7) Rollen sind.

## Revendications

1. Dispositif de guidage et d'étalonnage (100) d'un film plastique soufflé, comprenant une structure porteuse (1, 2) qui prévoit, le long d'une circonférence idéale, des points de rotation (3) équidistants de structures rotatives (4),
chaque structure rotative (4) comprend un montant vertical rotatif (43) et au moins un bras (44, 45) fixé sur ledit montant vertical rotatif (43),
un élément flottant vertical (5) est fixé, de manière rotative, sur le au moins un bras (44, 45),
des moyens de guidage (7) du film plastique soufflé sont fixés sur l'élément flottant vertical (5),
les structures rotatives (4) sont raccordées entre elles par le biais de moyens de synchronisation de mouvement (8, 9) actionnés par au moins un moteur (10),
**caractérisé en ce que** :
le dispositif (100) comprend en outre des paires de barres de poussée rectilignes (12a, 12b) dans lesquelles une première barre (12a) et une seconde barre (12b) sont toutes deux fixées, de manière solidaire, à un même élément flottant vertical (5) et forment un angle fixe (a) entre elles,
chaque barre (12a, 12b) de chaque paire de barres (12a, 12b) ayant une longueur telle qu'elle s'appuie sur les éléments flottants verticaux (5', 5") adjacents audit élément flottant vertical (5) sur lequel sont fixées lesdites barres (12a, 12b), dans n'importe quelle position adoptée par le dispositif (100) entre une position d'ouverture maximum et une position d'ouverture minimum.

2. Dispositif (100) selon la revendication 1, **caractérisé en ce que** chaque élément flottant vertical (5) est prévu avec des plans inclinés (51, 52), chaque barre (12a, 12b) de chaque paire de barres (12a, 12b) est fixée, de manière solidaire, aux plans inclinés (51, 52) respectifs d'un même élément flottant vertical (5), lesdits plans inclinés (51, 52) forment un angle fixe (a) entre eux.

3. Dispositif (100) selon la revendication 2, **caractérisé en ce que** lesdits plans inclinés (51, 52) s'étendent verticalement le long de toute la longueur de l'élément flottant vertical (5).

4. Dispositif (100) selon la revendication 2 ou 3, **caractérisé en ce que** la première barre (12a) peut s'appuyer, de manière coulissante, sur le plan incliné (52") de l'élément flottant vertical (5") adjacent à la droite de l'élément flottant vertical (5) sur lequel elle est fixée, alors que la seconde barre (12b) peut s'appuyer, de manière coulissante, sur le plan incliné (51') de l'élément flottant vertical (5') adjacent à la gauche de l'élément flottant vertical (5) sur lequel elle est fixée.

5. Dispositif (100) selon l'une quelconque des revendications précédentes, **caractérisé en ce que** l'angle décrit par chaque barre (12a, 12b) de chaque paire de barres (12a, 12b) par rapport à un axe (D) orthogonal à une circonférence (C) à laquelle les moyens de guidage (7) sont toujours tangents, est égal à la moitié dudit angle fixe (a).

6. Dispositif (100) selon l'une quelconque des revendications précédentes, **caractérisé en ce que** les barres (12a, 12b) sont horizontales.

7. Dispositif (100) selon l'une quelconque des revendications précédentes, **caractérisé en ce que** les barres (12a, 12b) de chaque paire de barres (12a, 12b) sont mutuellement solidaires, c'est-à-dire qu'elles forment une barre à section unique avec deux parties qui forment ledit angle fixe (a) et fixées à un élément flottant vertical (5) où ledit angle fixe (α) est formé.

8. Dispositif (100) selon l'une quelconque des revendications précédentes, **caractérisé en ce qu'**il fournit un nombre de paires de barres (12a, 12b) égal au nombre d'éléments flottants verticaux (5).

9. Dispositif (100) selon l'une quelconque des revendications précédentes, **caractérisé en ce que** chaque structure rotative (4) comprend un bras supérieur (44) et un bras inférieur (45) fixés audit montant vertical rotatif (43), l'élément flottant vertical (5) étant fixé, de manière rotative, à chaque paire de bras (44, 45).

10. Dispositif (100) selon l'une quelconque des revendications précédentes, **caractérisé en ce que** le au moins un bras (44, 45) a une première extrémité (441, 451) à laquelle l'élément flottant vertical (5) est fixé, de manière rotative, et une seconde extrémité (442, 452) fixée, de manière solidaire, au montant vertical rotatif (43).

11. Dispositif (100) selon l'une quelconque des revendications précédentes, **caractérisé en ce qu'**au moins un profilé vertical (6), qui peut supporter les moyens de guidage (7), est fixé sur l'élément flottant vertical (5).

12. Dispositif (100) selon l'une quelconque des revendications précédentes, **caractérisé en ce que** les moyens de guidage (7) sont des rouleaux.
